# EUROPEAN PATENT APPLICATION

(11) **EP 3 550 165 A1**
(43) Date of publication of application: **09.10.2019**
(21) Application number: 19167274.0
(22) Date of filing: 04.04.2019
(51) Int. Cl.: F16D 3/79, F16H 55/17

(54) **FLEXPLATES AND METHODS OF MAKING FLEXPLATES**

(30) Priority: 06.04.2018 US 201815947494
(71) Applicant: Goodrich Corporation, Charlotte, NC 28217-4578 (US)
(72) Inventor: LARSON, Joshua, Rome, NY 13440 (US); KING, Michael, Sauquoit, NY 13456 (US)
(74) Representative: Dehns

(57) **Abstract**

A flexplate (100) includes a disc body (102) having an inner radial portion (104), an outer radial portion (108), and a contoured profile (106) extending between the inner radial portion (104) and the outer radial portion (108). The contoured profile (106) tapers between the inner radial (104) and outer radial portions (108) such that the contoured profile (106) tapers along a radial extent of the contoured profile (106). Drivetrains and methods of making flexplates (100) for drivetrains are also described.

## Description

### BACKGROUND OF THE INVENTION

### 1. Field of the Invention

The present disclosure relates to flexplates for drivetrains, and more particularly to flexplates with contoured profiles for automobile drivetrains.

### 2. Description of Related Art

Ground vehicles, such as automobiles, commonly include drivelines with flexplates. The flexplate is generally a metal disc, typically formed from steel, that couples the output from the engine crankshaft to the input of the torque converter to transmit power generated by the engine into the torque converter of the transmission while accommodating misalignments that may be present in the drive line. Misalignments in the driveline can result from fluid pressure changes within the torque converter due to change in engine speed, which causes forward and backward flexure of the flexplate. Misalignment can also result from back and forth movement of the engine crankshaft during engine operation.

Flexplate height, i.e., the flexplate dimension that is generally orthogonal to the driveline in a nominal state, is generally selected to provide sufficient distance from the driveline to start the engine by exerting starting force at the flexplate periphery. Flexplate thickness, i.e., the dimension generally parallel to the driveline in the nominal state, is typically selected to balance robustness suitable for engine output with weight and ease of manufacture for a given driveline.

Such conventional methods and systems have generally been considered satisfactory for their intended purpose. However, there is still a need in the art for improved flexplates, drivetrains having improved flexplates, and methods of making improved flexplates for vehicular drivetrains. The present disclosure provides a solution for this need.

### SUMMARY OF THE INVENTION

A flexplate includes a disc body having an inner radial portion, an outer radial portion, and a contoured profile extending between the inner radial portion and the outer radial portion. The contoured profile tapers between the inner radial and outer radial portions such that the contoured profile tapers along a radial extent of the contoured profile.

In certain embodiments the inner radial portion can extend about an axis. The tapered contoured profile can extend continuously without interruption about the axis between the inner radial portion and the outer radial portion. The tapered contoured profile can be interrupted by one or more apertures. The contoured profile can have a wolffian profile shape. At least one of the inner radial portion and the radially outer portion can be integrally formed with the disc body. At least one of the radially inner portion and the radially outer portion are coupled to the disc body.

In accordance with certain embodiments, the contoured profile can taper symmetrically between the inner radial portion and a location of minimum thickness defined between the inner radial portion and the outer radial portion. The contoured profile can taper asymmetrically between the inner radial portion and a location of minimum thickness defined between the inner radial portion and the outer radial portion. The location of minimum thickness can be adjacent to or offset from the outer radial portion of the disc body.

It is contemplated that, in accordance with certain embodiments, the outer radial portion can have gear teeth arranged on a side of the outer radial portion opposite the contoured profile. The gear teeth can be configured to receive a pinion gear of a start module. The inner radial portion can have a fastener pattern to connect a drive member to the disc body. The outer radial portion can have a fastener pattern connect a driven member to the disc body. It is also contemplated that the inner radial portion can have a fastener pattern to connect an internal combustion engine or electrical machine to the flexplate, and that the outer radial portion can have a fastener pattern to connect a torque converter or a flywheel to the flexplate. The drivetrain can be an automobile drivetrain.

A drivetrain includes a drive member, a driven member, and a flexplate as described above. The flexplate couples the driven and drive members. The flexplate is arranged to transmit power from the drive member to the driven member. An internal combustion engine or an electric machine can be operably connected as the drive member. A torque converter or a flywheel can be connected to the driven member. The outer radial portion can have gear teeth arranged on a side of the outer radial portion opposite the contoured profile to intermesh with a pinion gear of a start module. The hub and the outer radial portions can have fastener patterns connecting the drive member to the disc body inner and outer radial portions.

A method of making a flexplate includes defining a contoured profile tapering to a location of minimum thickness in a disc body, the contoured profile having a contoured profile between the inner radial portion and the outer radial portion such that a thickness of the contoured profile tapers a radial extent of the contoured profile. An inner radial portion is defined with or coupled to the disc body at a location radially inward of the contoured profile. An outer radial portion is defined or coupled to the disc body at a location radially outward of the contoured profile. Gear teeth are defined about the a periphery of the outer radial portion. Gear teeth are defined about the periphery of the outer radial portion.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic-perspective view of an exemplary embodiment of a flexplate constructed in accordance with the present disclosure, showing the flexplate coupling source of mechanical power to a mechanically driven element through a drivetrain in a vehicle;
Fig. 2 is an exploded view of the drivetrain Fig. 1, showing drive and driven members of the drivetrain exploded away from the flexplate and a start module with a pinion gear intermeshed with the flexplate;
Fig. 3 is a plan view of the flexplate of Fig. 1, showing the contoured profile extending between the inner radial portion and outer radial portion of the flexplate;
Figs. 4A-4C are cross-sectional views of the flexplate of Fig. 1, showing the flexplate contoured profile in a nominal state and deformed states, respectively;
Figs. 5 and 6 are exemplary cross-sectional views of embodiments of the flexplate of Fig. 1, showing symmetrical diaphragm contours defining locations of minimum thickness adjacent to the outer radial portion and radially offset from the outer radial portion, respectively; and
Figs. 7 and 8 are exemplary cross-sectional views of embodiments of the flexplate of Fig. 1, showing asymmetrical diaphragm contours defining locations of minimum thickness adjacent to the outer radial portion and radially offset from the outer radial portion, respectively;
Fig. 9 is a block diagram of an exemplary method of making a flexplate according to the present disclosure, showing the steps of the method.

### DETAILED DESCRIPTION OF THE PREFERRED EMBODIMENTS

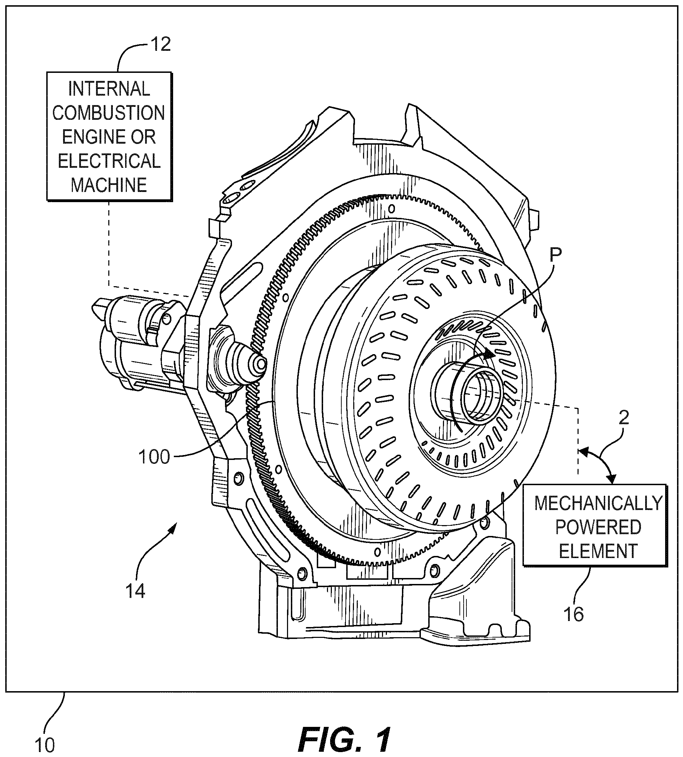

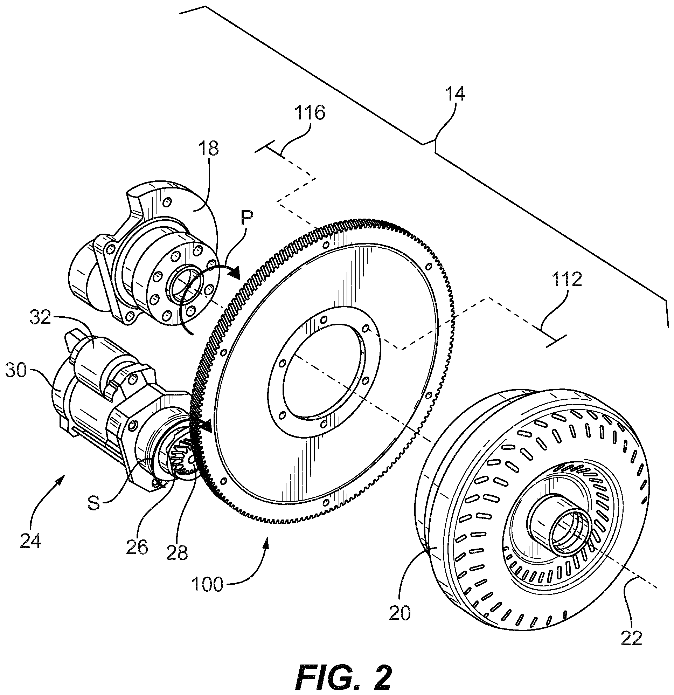

Reference will now be made to the drawings wherein like reference numerals identify similar structural features or aspects of the subject disclosure. For purposes of explanation and illustration, and not limitation, a partial view of an exemplary embodiment of a flexplate in accordance with the disclosure is shown in Fig. 1 and is designated generally by reference character 100. Other embodiments of flexplates, vehicle drivetrains having flexplates, and methods of making flexplates for vehicle drivetrains in accordance with the disclosure, or aspects thereof, are provided in Figs. 2-9, as will be described. The systems and methods described herein can be used in drivetrains for vehicle drivetrains, such as automobile drivetrains, through the present disclosure is not limited to automobile drivetrains or to terrestrial vehicles in general.

Referring the Fig. 1, a vehicle 10 is shown. Vehicle 10 includes a mechanical power source 12, a drivetrain 14, and a mechanically powered element 16. Mechanical power source 12 is configured and adapted to generate mechanical power P and can include an internal combustion engine or an electrical machine. Mechanically powered element 16 is configured and adapted to provide motive force to vehicle 10 and include one or more wheel, screws and/or rotors/propellers. Drivetrain 14 is configured and adapted to transmit mechanical power P from mechanical power source 12 to mechanically powered element 16 through flexplate 100. It is contemplated that vehicle 10 be a ground vehicle, such as an automobile, drivetrain 14 communicating mechanical power P via flexplate 100 from mechanical power source 12 to mechanically powered element 16.

With reference to Fig. 2, a drivetrain 14 is shown in an exploded view. Drivetrain 14 includes a drive member 18, driven member 20, and flexplate 100. Drive member 18 is arranged along axis 22 and is configured and adapted to transmit mechanical power P from mechanical power source 12 (shown in Fig. 1) to flexplate 100. Driven member 20 is similarly arranged along axis 22 and is configured to receive mechanical power P from drive member 18 through flexplate 100. In the illustrated exemplary embodiment axis 22 is a drive train axis, drive member 18 is a crankshaft for an internal combustion engine, and driven member 20 is torque-converter for an automatic transmission. It is to be understood that this is explanation purposes only, and is non-limiting. As will be appreciated by those of skill in the art in view of the present disclosure, other types of drivetrains can also benefit from the present disclosure, such as drivetrains including flywheels in manual transmissions by way of non-limiting example.

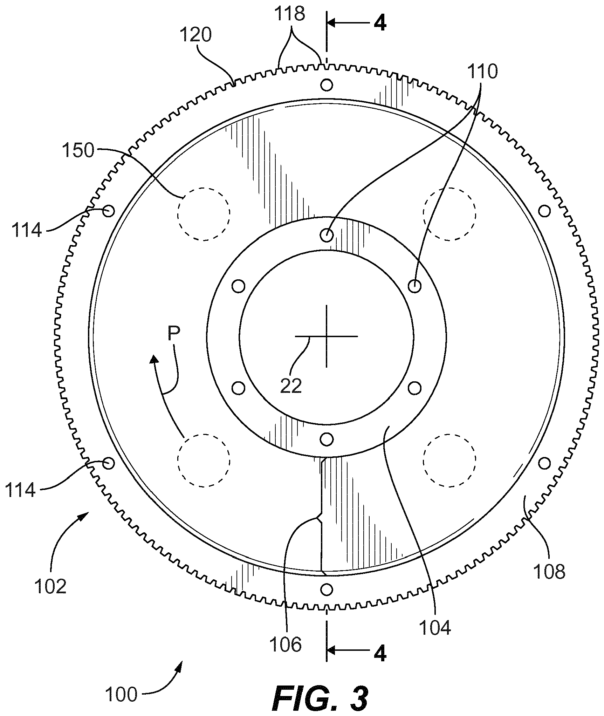

With reference to Fig. 3, flexplate 100 is shown. Flexplate 100 includes a disc body 102. Disc body 102 has an inner radial portion 104, a contoured profile 106, and an outer radial portion 108, disc body in certain embodiments being a singular diaphragm disc similar in construction to that commonly employed in flexible diaphragm coupling disc pairs. Inner radial portion 104 extends about axis 22 and is configured and adapted for rotational fixation to drive member 18 (shown in Fig. 2). In this respect, as shown in the exemplary embodiment illustrated in Fig. 3, inner radial portion 104 defines a fastener pattern 110. One or more fasteners 112 (shown in Fig. 2) seat within fastener pattern 110 to connect inner radial portion 104 to drive member 18, flexplate 100 thereby being rotationally fixed relative to drive member 18. In certain embodiments fastener pattern 110 conforms to a flexplate without a contoured profile, flexplate 100 thereby being readily retrofit as a replacement or upgrade to an existing drivetrain.

Outer radial portion 108 also extends about axis 22. More particularly, outer radial portion 108 is arranged radially outward of both inner radial portion 104 and contoured profile 106, and is configured and adapted for rotational fixation to driven member 20 (shown in Fig. 2). With respect to rotational fixation to driven member 20, outer radial portion 108 defines a fastener pattern 114. One or more fasteners 116 (shown in Fig. 2) seat within fastener pattern 114 to connect outer radial portion 108 to driven member 20, flexplate 100 thereby being rotationally fixed relative to driven member 20. In certain embodiments fastener pattern 114 conforms to a flexplate without a contoured profile, flexplate 100 thereby being readily retrofit as a replacement or upgrade to an existing drivetrain.

With continuing reference to Fig. 2, it is contemplated that, in certain embodiments, flexplate 100 can be configured and adapted to transmit starting mechanical power S to mechanical power source 12 (shown in Fig. 1). In this respect starting mechanical power S is received at flexplate 100 from a starting module 24. Starting module 24 is configured and adapted to selectively engage flexplate 100 for communicating starting power S through flexplate 100 to mechanical power source 12 (shown in Fig. 1). In the illustrated exemplary embodiment outer radial portion 108 has a plurality of gear teeth 118 (indicated in Fig. 3) arranged about a radially outer periphery 120 (shown in Fig. 3) of flexplate 100. Gear teeth 118 are configured to intermesh with gear teeth 26 of a pinion gear 28 of starting module 24, starting module having an electric motor 30 and solenoid 32 for selectively intermeshing gear teeth 26 with outer radial portion gear teeth 118, as appropriate for the operation of vehicle 10 (shown in Fig. 1). As will be appreciated by those of skill in the art in view of the present disclosure, this is for illustration purposes only and is non-limiting, and flexplate 100 can be arranged to interact without gear teeth about the flexplate periphery, as suitable for an intended application.

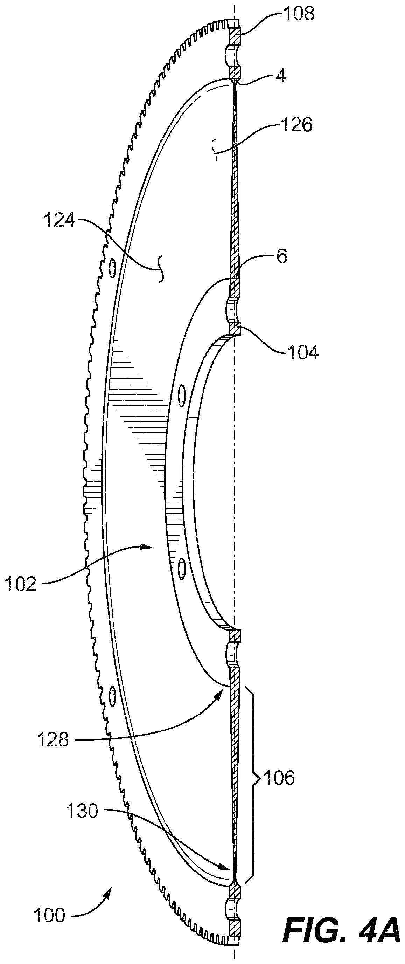

Referring again to Fig. 3, contoured profile 106 extends radially relative to axis 22 between inner radial portion 104 and outer radial portion 108 and has a contoured profile 106 (shown in Fig. 4A). Contoured profile 106 is configured and adapted to limit torsional shear stress and bending stress within flexplate 100 between inner radial portion 104 and outer radial portion 108 associated with transmission of mechanical power P through flexplate 100 between inner radial portion 104 and outer radial portion 108 while accommodating misalignment 2 (shown in Fig. 1) between drive member 18 (shown in Fig. 2) and driven member 20 (shown in Fig. 2). More specifically, contoured profile 106 tapers between inner radial portion 104 and outer radial portion 108 to limit torsional shear stress and/or bending stress between inner radial portion 104 and outer radial portion 108 when communicating mechanical power P between inner radial portion 104 and outer radial portion 108. The taper can be, for example, uniform or stepped, as appropriate for a contemplated application. Examples of suitable contoured profiles include those described in U.S. Patent No. 5,158,504 to Stocco, issued on October 27, 1992, and U.S. Patent No. 8,591,345 to Stocco et al., issued on November 23, 2013, the contents of which are incorporated herein by reference.

In certain embodiments contoured profile 106 extends continuously without interruption about axis 22 between inner radial portion 104 and outer radial portion 108. In such embodiments no apertures extend through flexplate 100 within contoured profile 106. In accordance with certain embodiments contoured profile 106 can be interrupted by one or more apertures 150 (indicated in dashed outline in Fig. 3). Aperture(s) 150 can potentially reduce the weight of flexplate 100.

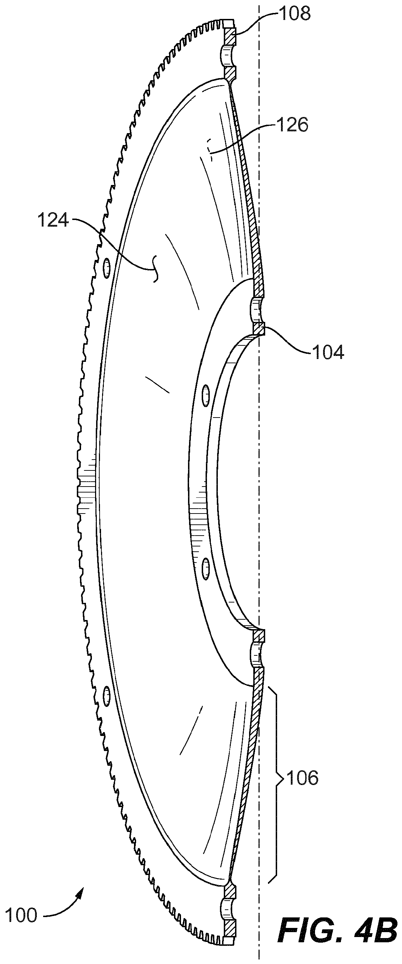

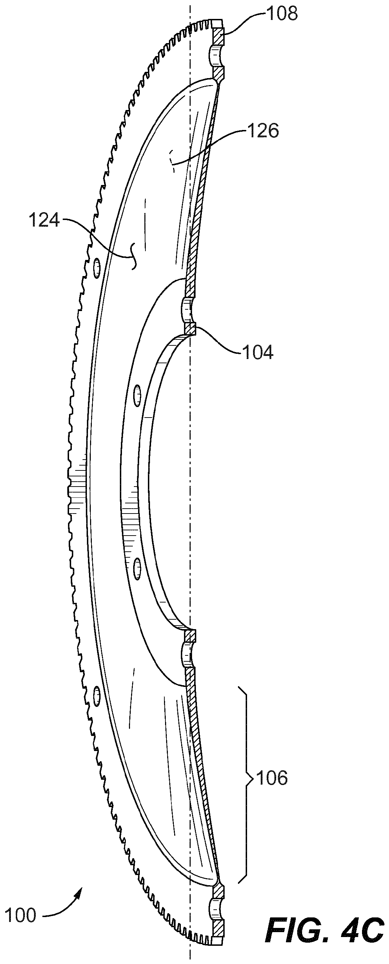

With reference to Figs. 4A-4C, an exemplary shape of contoured profile 106 is shown. Contoured profile 106 is defined between a drive member face 124 and a driven member face 126 of flexplate 100. Between drive member face 124 and driven member face 126 the contoured profile 106 tapers uniformly in axial thickness in between inner radial portion 104 and outer radial portion 108 between a location of maximum cross-sectional thickness 128 to a location of minimum cross-sectional thickness 130. Contoured profile 106 is selected to limit torsional shear stress and bending stress within flexplate 100 between inner radial portion 104 and outer radial portion 108 associated with mechanical power P transmitted through contoured profile 106 between inner radial portion 104 and outer radial portion 108, such as when undergoing deformation in a direction toward drive member face 124 as shown in Fig. 4B and/or towards driven member face 126 as shown in Fig. 4C to accommodate misaligned 2 (shown in Fig. 1).

In the illustrated exemplary embodiment contoured profile 106 defines a wolffian profile shape between inner radial portion 104 and outer radial portion 108. As will be appreciated by those of skill in the art in view of the present disclosure, wolffian profile shapes can have relatively high torque-carrying capability.

In certain embodiments inner radial portion 104 and disc body 102 can be integrally formed from a common piece of stock material, such as in a turning or milling operation. In accordance with certain embodiments outer radial portion 108 and disc body 102 can be integrally formed from the a common piece of stock material. It is contemplated that the outer radial portion 108 can be coupled to disc body 102, such as by a weld or fastener 4. It is also contemplated that inner radial portion 104 can be coupled to disc body 102, such as by a weld or fastener 6.

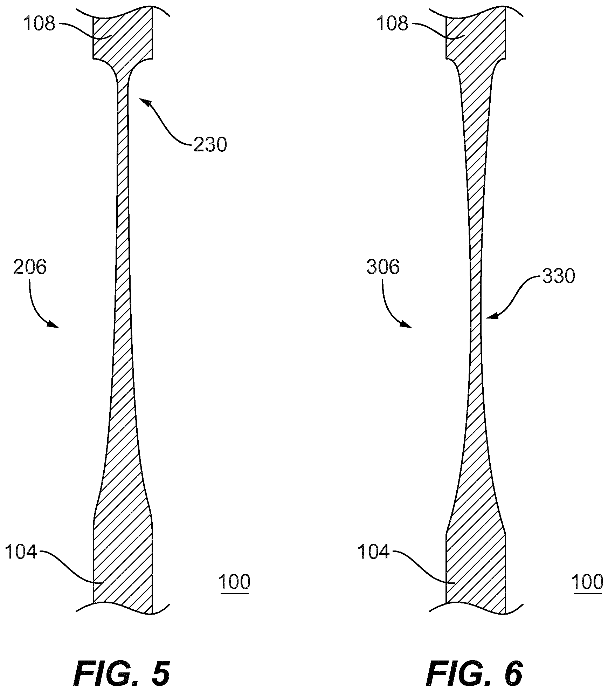

With reference to Fig. 5 and 6, exemplary symmetrical contoured profiles are shown. As used herein the term symmetrical refers to contoured profiles wherein the drive member face and the driven member face mirror one another radially between the inner radial portion and the outer radial portion in the nominal state. Referring to Fig. 5, it is contemplated that flexplate 100 can have a contoured profile 206 with location of minimum axial thickness 230 between outer radial portion 108 and inner radial portion 104 that is adjacent to outer radial portion 108. Flexplates having the location of minimum thickness adjacent to the outer radial portion can have greater stiffness, increasing torque-carrying capability but having reduced tolerance for misalignment.

Referring to Fig. 6, it is also contemplated that flexplate 100 can have a contoured profile 306 with a location of minimum axial thickness 330 that is offset from outer radial portion 108 towards inner radial portion 104, as shown in Fig. 6. As will be appreciated by those of skill in the art in view of the present disclosure, flexplates having a location of minimum thickness offset from the outer radial portion can have reduced bending stiffness in comparison to flexplates having locations of minimum thickness adjacent to the outer radial portion, increasing tolerance for misalignment.

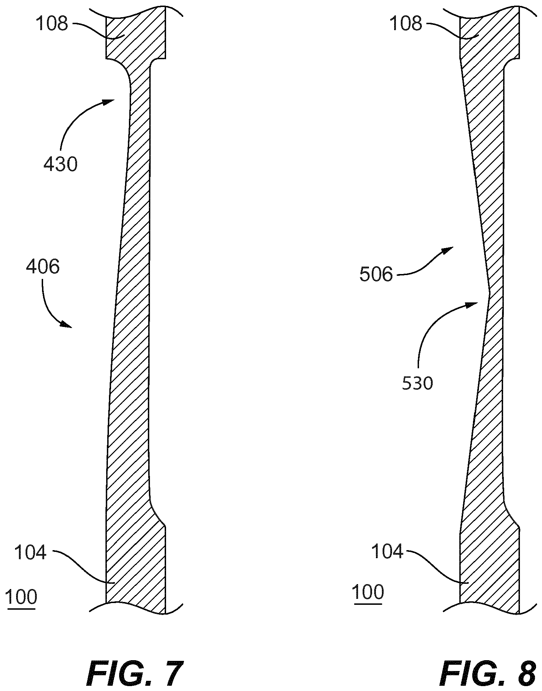

With reference to Figs. 7 and 8, exemplary asymmetrical contoured profile are shown. As used herein the term asymmetrical refers to contoured profiles wherein the drive member face and the driven member face do not mirror one another radially between the inner radial portion and the outer radial portion in the flexplate nominal state. Referring to Fig. 7, it is contemplated that flexplate 100 can have an asymmetrical contoured profile 406 tapering to a location of minimum axial thickness 430 adjacent to outer radial portion 108. Referring to Fig. 8, it is also contemplated that flexplate 100 can have a contoured profile 506 tapering to a location of minimum axial thickness 530 offset from outer radial portion 108 and in a direction towards inner radial portion 104. Flexplates having asymmetrical profiles have the advantage of ease of manufacture, only single axial face of the profile being imparted with a contour.

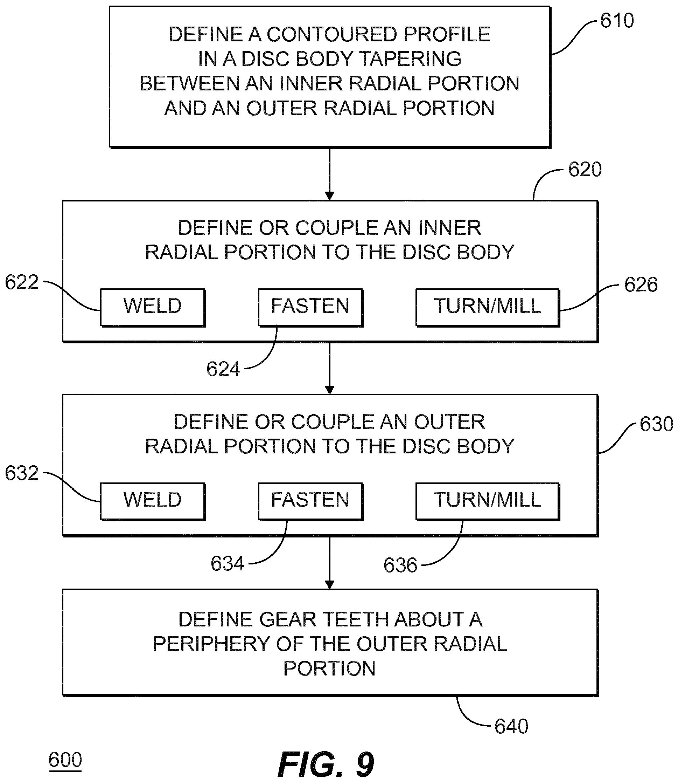

With reference to Fig. 9, a method 600 of making a flexplate, e.g., flexplate 100 (shown in Fig. 1), is shown. Method 600 includes defining a contoured profile in a disc-shaped body, e.g., contoured profile 106 (shown in Fig. 4A) in disc body 102 (shown in Fig. 4A), as shown with box 610. It is contemplated that contoured profile taper between a radially inner portion, e.g., radially inner portion 104 (shown in Fig. 4A), and a radially outer portion, e.g., a radially outer portion 108.

The inner radial portion can be integrally formed with or coupled to the disc body at a location radially inward of the contoured profile, as shown with box 620. For example, the inner radial portion and the contoured profile can be formed from a common piece of stock material, such in as in a turning or milling operation, as shown with box 626. Alternatively, inner radial portion can be coupled to disc-body, such as by welding or fastening by way of non-limited example, with boxes 622 and 624.

The outer radial portion can be integrally formed with or coupled to the disc body at a location radially outward of the contoured profile, as shown with box 630. For example, either or both the inner radial portion and outer radial portion and the contoured profile can be formed from a common piece of stock material, such in as in a turning or milling operation, as shown with box 636. Alternatively, the inner radial portion can be coupled to disc body, such as by welding or fastening by way of non-limited example, with boxes 632 and 634. Gear teeth, e.g., gear teeth 118 (indicated in Fig. 3) can be defined about a periphery of the outer radial portion, as shown with box 640.

Flexplates having a contoured profile have several advantages in comparison to non-contoured or uniform thickness flexplates. For example, the contoured diaphragm thickness can be selected according to a predetermined taper to make the thickness more closely correspond a desired level of stress between the inner radial portion and the outer radial portion. At locations where the shear strain carried by the flexplate is relatively high, e.g., at radial locations relatively close to the flexplate inner radial portion, the contoured profile can be relatively thick to resist such shear strain. At locations where the shear strain carried by the flexplate is relatively low, e.g., at radial location relatively close to the flexplate outer radial portion, the contoured profile can be relatively thin. This allows the stress level within the flexplate to remain relatively constant between the flexplate inner radial portion and outer radial portion while limiting the weight of the flexplate, which as will be appreciated by those of skill in the art in view of the present disclosure, limits the rotational inertia carried by the flexplate during operation. This is generally advantageous as limiting the amount of rotational inertia 'banked' in the flexplate during operation can improve responsiveness of the vehicle drivetrain to increase and/or decrease in rotational speed while transmitting mechanical power through a vehicle drivetrain. It can also reduce (or eliminate entirely) the need for lightening holes that otherwise can be necessary, which can interrupt the load-carrying capability of the flexplate circumferentially, increasing the likelihood of a facture at locations subject to stress concentration.

The methods and systems of the present disclosure, as described above and shown in the drawings, provide for flexplates, drivetrains having flexplates, and methods of making flexplates with superior properties including relatively low weight for a given torque-carrying capability and/or expected fatigue life that exceeds the expected lifetime of the vehicle drivetrain including the flexplate. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A flexplate (100), comprising:
a disc body (102) having an inner radial portion (104), an outer radial portion (108) and a contoured profile (206) extending between the inner radial portion (104) and the outer radial portion (108), the contoured profile (206) having a contoured profile between the inner radial portion (104) and the outer radial portion such that a thickness of the contoured profile tapers a radial extent of the contoured profile (206).

2. The flexplate as recited in claim 1, wherein the inner radial portion (104) extends about an axis, wherein the tapered contoured profile of the contoured profile (206) extends continuously without interruption about the axis between the inner radial portion (104) and the outer radial portion (108), and preferably wherein without interruption means without any apertures extending through the contoured profile (206).

3. The flexplate as recited in claim 1 or 2, wherein the contoured profile (206) is selected such that torsional stress is substantially uniform radially between the inner radial portion (104) and the outer radial portion (108) when communicating torque between the inner radial portion (104) and the outer radial portion (108).

4. The flexplate as recited in any preceding claim, wherein the inner radial portion (104) extends about an axis, wherein the tapered contoured profile is interrupted by one or more apertures extending through the contoured profile (206).

5. The flexplate as recited in any preceding claim, wherein the contoured profile (206) is axially symmetric and a thickness of the contoured profile (206) is tapered in a radial direction between the inner radial portion and a location of minimum thickness between the hub and outer radial portions (108), and preferably
wherein the location of minimum thickness is adjacent to the outer radial portion (108) of the disc body or is offset from the outer radial portion (108) of the disc body (102).

6. The flexplate as recited in any preceding claim, wherein the contoured profile tapers asymmetrically between the inner radial portion (104) and a location of minimum thickness between the hub and outer radial portions (108), and preferably
wherein the location of minimum thickness is adjacent to the outer radial portion (108) of the disc body (102) or is offset from the outer radial portion of the disc body (102).

7. The flexplate as recited in any preceding claim, wherein the contoured profile (206) has a wolffian profile shape between the inner radial portion (104) and the outer radial portion (108).

8. The flexplate as recited in any preceding claim, wherein the outer radial portion (108) has gear teeth (118) arranged on a side of the outer radial portion (108) opposite the contoured profile, the gear teeth (118) arranged about a periphery of the flexplate (100) to receive a pinion gear (28) of a start module (24).

9. The flexplate as recited in any preceding claim, wherein one of the inner (104) and outer radial portions (108) has a fastener pattern configured to connect a drive member to the disc body (102), wherein the other of the inner and outer radial portions has a fastener pattern configured to connect a driven member to the disc body (102).

10. The flexplate as recited in any preceding claim, wherein at least one of the inner radial portion (104) and the outer radial portion (108) are integrally formed with the disc body (102), or
wherein at least one of the inner radial portion (104) and the outer radial portion (108) are coupled to the disc body (102).

11. A drivetrain, comprising:
a drive member;
a driven member configured to receive power from the drive member; and
a flexplate (100) as recited in claim 1, the flexplate (100) coupling the driven member to the drive member, the flexplate configured to transmit power between the drive member to the driven member through the tapered thickness with substantially uniform torsional stress radially along the contoured profile.

12. The drivetrain as recited in claim 11, further comprising an internal combustion engine or an electric machine operably connected to the drive member, and a torque converter or a flywheel connected to the driven member.

13. The drivetrain as recited claim 11 or 12, wherein the drivetrain is an automobile drivetrain, and preferably further comprising a start module (24) with a pinion gear (28) intermeshed with the gear teeth (118) of the flexplate (100).

14. The drivetrain as recited in claim 11, 12 or 13, wherein the outer radial portion (108) has gear teeth (118) arranged on a side of the outer radial portion opposite the contoured profile, the gear teeth (118) arranged about a periphery of the flexplate (100) to receive a pinion gear of a start module (24), wherein the inner radial portion has a fastener pattern connecting the drive member to the disc body (102), and wherein the outer radial portion (108) has a fastener pattern connecting the driven member to the disc body (102).

15. A method (600) of making a flexplate (100), comprising:
defining (106) a contoured profile tapering to a location of minimum thickness in a disc body (102), the contoured profile having a contoured profile between the inner radial portion (104) and the outer radial portion (108) such that a thickness of the contoured profile tapers a radial extent of the contoured profile;
defining or coupling an inner radial portion (104) to the disc body (102);
defining or coupling an outer radial portion (108) to the disc body (102); and
defining gear teeth (118) about a periphery of the outer radial portion (108).
